# EUROPEAN PATENT APPLICATION

(11) **EP 4 757 003 A1**
(43) Date of publication of application: **10.06.2026**
(21) Application number: 25214984.4
(22) Date of filing: 11.11.2025
(51) Int. Cl.: H01M 10/6555, H01M 50/209, H01M 50/242, H01M 50/503, H01M 50/507

(54) **POWER STORAGE DEVICE WITH GROOVED STRUCTURE TO SUPPRESS ELECTRICAL CONNECTION FAILURE UPON IMPACT**

(30) Priority: 06.12.2024 JP 2024213262
(71) Applicant: Toyota Jidosha Kabushiki Kaisha, Toyota-shi, Aichi-ken 471-8571 (JP)
(72) Inventor: TSUNEKAWA, Kunihiro, Toyota-shi, Aichi-ken, 471-8571 (JP); NAKADA, Koki, Toyota-shi, Aichi-ken, 471-8571 (JP); TAKESHITA, Shinya, Toyota-shi, Aichi-ken, 471-8571 (JP); TAKAHASHI, Naoyuki, Toyota-shi, Aichi-ken, 471-8571 (JP); KIMURA, Ryo, Toyota-shi, Aichi-ken, 471-8571 (JP); KATO, Kazuhito, Toyota-shi, Aichi-ken, 471-8571 (JP); SHIMONAKA, Toshihiro, Toyota-shi, Aichi-ken, 471-8571 (JP); ICHISAWA, Kota, Toyota-shi, Aichi-ken, 471-8571 (JP); MIYAHARA, Kenta, Toyota-shi, Aichi-ken, 471-8571 (JP)
(74) Representative: Winter, Brandl - Partnerschaft mbB

(57) **Abstract**

A power storage device (1) includes: a first power storage stack (11) including a first power storage cell (101); a second power storage stack (12) including a second power storage cell (102); a third power storage stack (13) including a third power storage cell (103); and a wiring panel (50) disposed below the first power storage stack (11), the second power storage stack (12), and the third power storage stack (13). The wiring panel (50) includes an insulator plate (51), and a first busbar module (511), a second busbar module (512), and a third busbar module (513), which are disposed on the insulator plate (51). The insulator plate (51) has a first bending starting point (j1) located between the first busbar module (511) and the second busbar module (512), and a second bending starting point (k1) located between the second busbar module (512) and the third busbar module (513).

## Description

### CROSS REFERENCE TO RELATED APPLICATIONS

This nonprovisional application is based on Japanese Patent Application No. 2024-213262 filed on December 6, 2024 with the Japan Patent Office, the entire content of which is hereby incorporated by reference.

### BACKGROUND

### Field

The present disclosure relates to a power storage device.

### Description of the Background Art

CN 116686151A discloses a battery (a power storage device) including a power storage cell having an electrode terminal (an external terminal) disposed on the lower surface of the power storage cell.

### SUMMARY

When an impact is input to the power storage device, which includes a power storage cell and a busbar module disposed below the power storage cell and electrically connecting the power storage cell, from below the power storage device, a poor electrical connection may occur between the busbar module and an external terminal of the power storage cell.

An object of the present disclosure is to suppress a poor electrical connection from occurring between a busbar module and an external terminal of a power storage cell when an impact is input to a power storage device from below the power storage device which includes the power storage cell and the busbar module disposed below the power storage cell and electrically connecting the power storage cell.
(1) A power storage device according to a certain aspect of the present disclosure includes: a first power storage stack including a first power storage cell; a second power storage stack disposed adjacent to the first power storage stack and including a second power storage cell; a third power storage stack disposed adjacent to the second power storage stack and including a third power storage cell; and a wiring panel disposed below the first power storage stack, the second power storage stack, and the third power storage stack. The wiring panel includes: an insulator plate; and a first busbar module, a second busbar module, and a third busbar module, which are disposed on the insulator plate. The first busbar module electrically connects the first power storage cell, the second busbar module electrically connects the second power storage cell, and the third busbar module electrically connects the third power storage cell. The insulator plate has a first bending starting point located between the first busbar module and the second busbar module, and a second bending starting point located between the second busbar module and the third busbar module.
(2) In the power storage device described in (1) above, the first power storage stack includes a plurality of first power storage cells arranged in a first direction, the plurality of first power storage cells including the first power storage cell. The second power storage stack is disposed adjacent to the first power storage stack in a second direction intersecting with the first direction and includes a plurality of second power storage cells arranged in the first direction, the plurality of second power storage cells including the second power storage cell. The third power storage stack is disposed adjacent to the second power storage stack in the second direction and includes a plurality of third power storage cells arranged in the first direction, the plurality of third power storage cells including the third power storage cell. The first busbar module electrically connects the plurality of first power storage cells. The second busbar module electrically connects the plurality of second power storage cells. The third busbar module electrically connects the plurality of third power storage cells.
(3) In the power storage device described in (1) above, the first bending starting point is a corner of a first groove formed in the insulator plate. The second bending starting point is a corner of a second groove formed in the insulator plate.
(4) In the power storage device described in (3) above, the first groove and the second groove are formed in a lower surface of the insulator plate.
(5) In the power storage device described in (3) above, the first groove and the second groove are formed in an upper surface of the insulator plate.
(6) The power storage device described in (3) above further includes a housing case accommodating the first power storage stack, the second power storage stack, and the third power storage stack. The housing case includes a bottom plate. The insulator plate is disposed on an upper surface of the bottom plate. A first bottom-plate groove, located below the first groove, and a second bottom-plate groove, located below the second groove, are formed in the bottom plate.
(7) In the power storage device described in (1) above, the insulator plate is formed of a flexible resin.
(8) The power storage device described in (3) above further includes a cooling device including a first cooling plate and a second cooling plate. The first cooling plate is disposed between the first power storage stack and the second power storage stack. The second cooling plate is disposed between the second power storage stack and the third power storage stack. The first cooling plate is disposed above the first groove, and the second cooling plate is disposed above the second groove.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram schematically showing a vehicle including a power storage device according to Embodiment 1.
Fig. 2 is a schematic exploded perspective view of the power storage device of Fig. 1.
Fig. 3 is a plan view schematically showing the power storage device of Fig. 1 having an upper cover removed therefrom.
Fig. 4 is a perspective view showing a power storage cell of Fig. 2.
Fig. 5 is a cross-sectional view of the power storage device, taken along a V-V line of Fig. 3.
Fig. 6 is a perspective view showing a wiring panel and one power storage stack.
Fig. 7 is a cross-sectional view of the power storage device, taken along a VII-VII line of Fig. 3.
Fig. 8 is a bottom view showing three busbar modules, three power storage stacks, and two cooling plates.
Fig. 9 is an enlarged cross-sectional view of an area IX of Fig. 7.
Fig. 10 is an enlarged cross-sectional view of grooves 51j and 51k of Fig. 9.
Fig. 11 is a diagram showing Variation 1 of grooves 51j and 51k.
Fig. 12 is a diagram showing Variation 2 of grooves 51j and 51k.
Fig. 13 is an enlarged cross-sectional view of an area IX of Fig. 7 of a power storage device according to Embodiment 2.
Fig. 14 is an enlarged cross-sectional view of grooves 51u and 51v of Fig. 13.
Fig. 15 is a diagram showing Variation 1 of grooves 51u and 51v.
Fig. 16 is a diagram showing Variation 2 of grooves 51u and 51v.
Fig. 17 is an enlarged cross-sectional view of an area IX of Fig. 7 of a power storage device according to Embodiment 3.
Fig. 18 is an enlarged cross-sectional view of an area IX of Fig. 7 of a power storage device according to Embodiment 4.

### DESCRIPTION OF THE PREFERRED EMBODIMENTS

Hereinafter, embodiments according to the present disclosure and variations thereof will be described, with reference to the accompanying drawings. Note that like reference signs are used to refer to like or corresponding parts in the drawings, and the description thereof will not be repeated.

### [Embodiment 1]

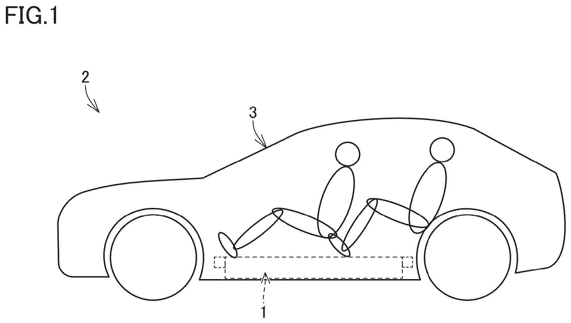

Fig. 1 is a diagram schematically showing a vehicle including a power storage device according to Embodiment 1. A vehicle 2 includes a vehicle body 3 and a power storage device 1. Examples of vehicle 2 include a hybrid electric vehicle, a plug-in hybrid electric vehicle, and a battery electric vehicle. Power storage device 1 is mounted on the bottom of vehicle body 3.

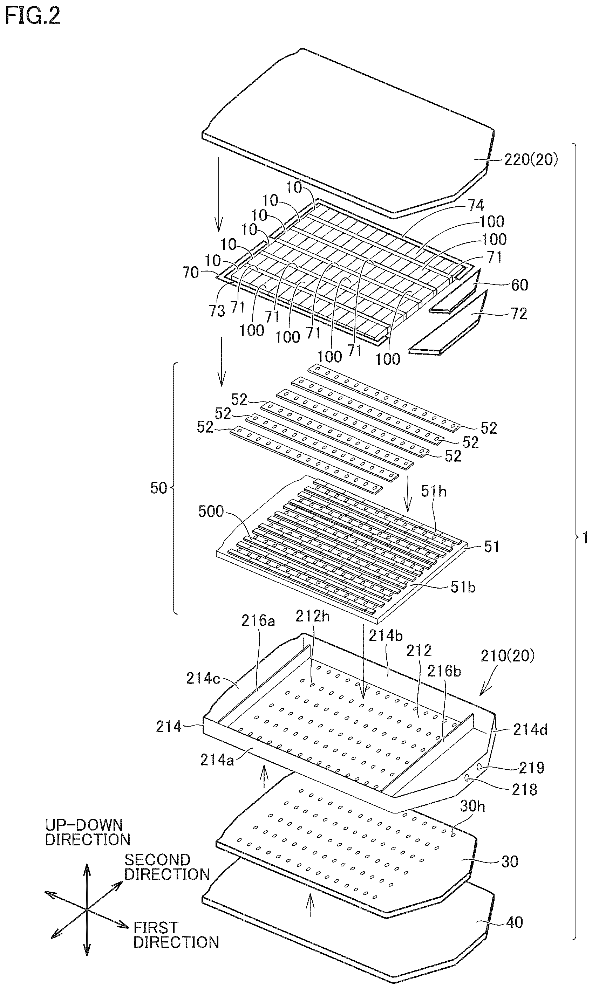

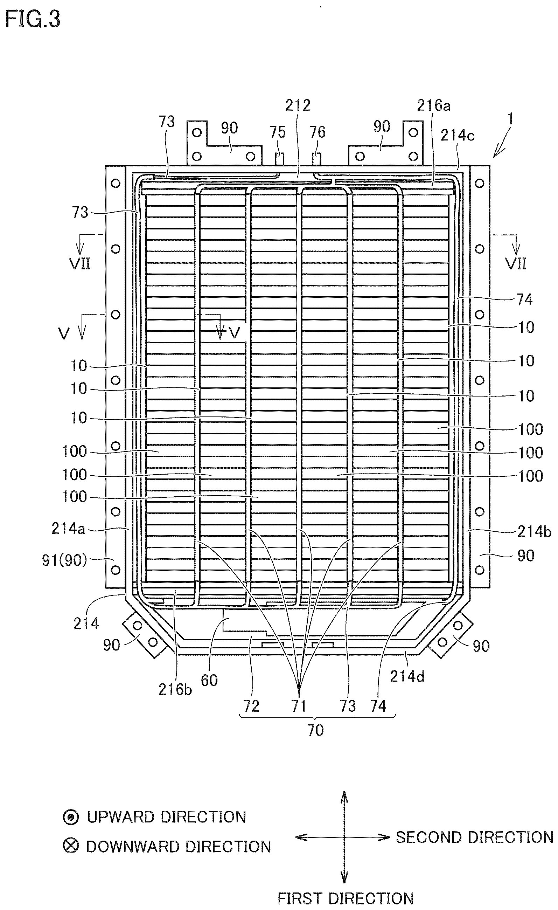

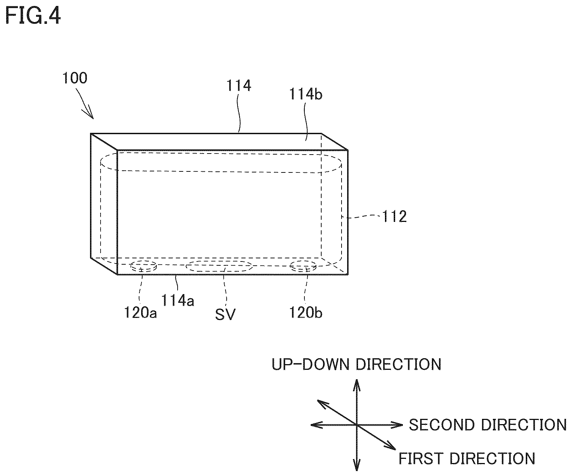

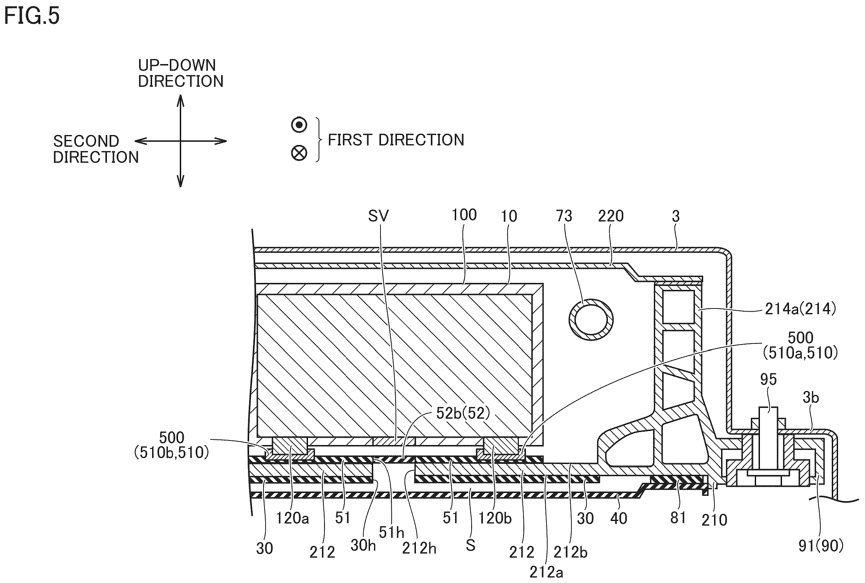

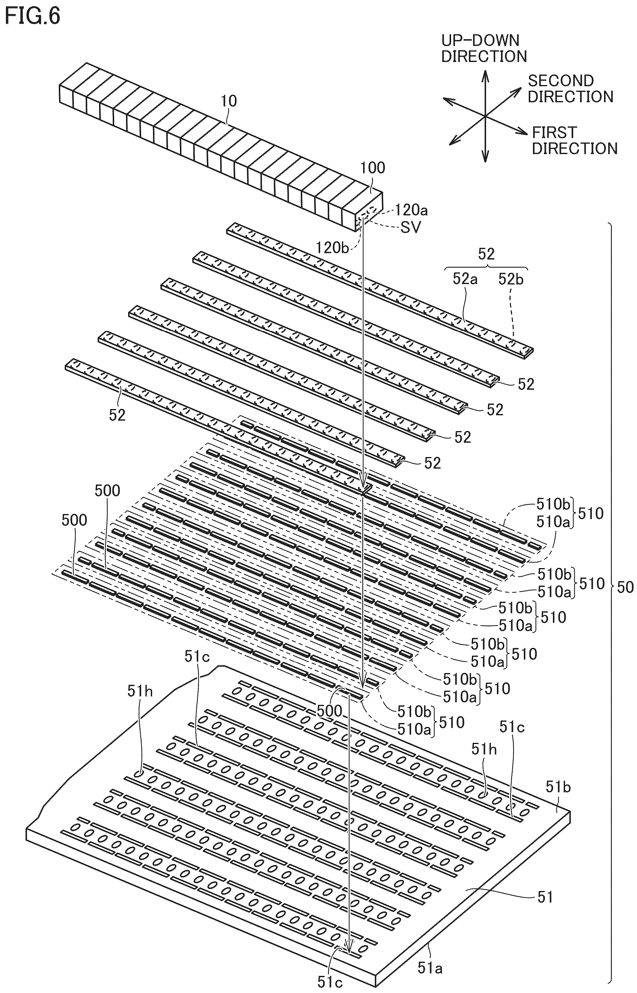

Fig. 2 is a schematic exploded perspective view of the power storage device of Fig. 1. Fig. 3 is a plan view schematically showing the power storage device of Fig. 1 having the upper cover removed therefrom. Fig. 4 is a perspective view showing the power storage cell of Fig. 2. Fig. 5 is a cross-sectional view of the power storage device, taken along a V-V line of Fig. 3. Fig. 6 is a perspective view showing a wiring panel and one power storage stack.

Referring to Fig. 2, power storage device 1 includes multiple power storage stacks 10, a housing case 20, an insulator plate 30, a panel member 40, a wiring panel 50, devices 60, and a cooling device 70.

Multiple power storage stacks 10 are disposed on wiring panel 50. In Embodiment 1, the number of power storage stacks 10 is six. However, the number of power storage stacks 10 is not limited to six.

Each power storage stack 10 is formed in a cuboid shape elongated in a first direction. Multiple power storage stacks 10 are aligned along a second direction intersecting with both the first direction and the up-down (vertical) direction. Multiple power storage stacks 10 are disposed spaced apart from one another in the second direction. In Embodiment 1, the first direction corresponds to the front-rear direction of vehicle 2, and the second direction corresponds to the width direction of vehicle 2. In Embodiment 1, the second direction is orthogonal to both the first direction and the up-down (vertical) direction. Note that the first direction is not limited to the front-rear direction of vehicle 2. Moreover, the second direction is not limited to the width direction of vehicle 2.

Each power storage stack 10 includes multiple power storage cells 100. Multiple power storage cells 100 are aligned along the first direction.

Referring to Fig. 4, each power storage cell 100 includes an electrode assembly 112 and a cell case 114.

Electrode assembly 112 may be configured of a wound body in which a positive electrode sheet and a negative electrode sheet are wound with a separator interposed therebetween., or a laminate in which a positive electrode sheet and a negative electrode sheet are laminated with a separator interposed therebetween. Electrode assembly 112 is formed in a shape elongated in the second direction.

Cell case 114 accommodates electrode assembly 112. Cell case 114 is formed in a cuboid shape. Cell case 114 is made of metal such as aluminum. Cell case 114 includes a lower surface 114a and an upper surface 114b. Lower surface 114a and upper surface 114b are disposed spaced apart from each other in the up-down direction. Upper surface 114b is located above the lower surface 114a.

Each power storage cell 100 further includes a cell exhaust-gas valve SV. Cell exhaust-gas valve SV is provided in lower surface 114a of cell case 114. Each power storage cell 100 is disposed so that cell exhaust-gas valve SV is located above a through-hole 51h of an insulator plate 51 of Fig. 2.

Each power storage cell 100 further includes a pair of external terminals 120a and 120b. In Embodiment 1, external terminal 120a is a positive terminal and external terminal 120b is a negative terminal. Note that the external terminal 120a may be a negative terminal and external terminal 120b may be a positive terminal.

The pair of external terminals 120a and 120b are disposed on lower surface 114a of cell case 114. The pair of external terminals 120a and 120b are disposed spaced apart from each other in the width direction of cell case 114. The width direction of cell case 114 corresponds to the second direction.

Referring to Fig. 2, housing case 20 accommodates multiple power storage stacks 10, wiring panel 50, devices 60, and cooling device 70. Housing case 20 includes a lower case 210 and an upper cover 220. Upper cover 220 is disposed above the lower case 210.

Lower case 210 is formed to open upward. For example, lower case 210 is formed of metal such as aluminum. Lower case 210 includes a bottom plate 212, a surrounding wall 214, a partition wall 216a, and a partition wall 216b.

Bottom plate 212 is formed in a plate shape. In Embodiment 1, bottom plate 212 is formed in a solid shape. Multiple through-holes 212h are formed in bottom plate 212, spaced apart from one another in the first direction and the second direction. Note that the bottom plate 212 may be formed in a hollow shape.

Referring to Fig. 5, bottom plate 212 includes a lower surface 212a and an upper surface 212b. Lower surface 212a and upper surface 212b are disposed spaced apart from each other in the up-down direction. Upper surface 212b is located above the lower surface 212a.

Referring to Fig. 2, surrounding wall 214 stands up from the outer peripheral edge of bottom plate 212. Surrounding wall 214 has a shape surrounding multiple power storage stacks 10.

Referring to Fig. 3, surrounding wall 214 includes a side wall 214a, a side wall 214b, an end plate 214c, and an end plate 214d. Side wall 214a, side wall 214b, end plate 214c, and end plate 214d are each formed in a hollow shape. Note that the side wall 214a, side wall 214b, end plate 214c, and end plate 214d may each be formed in a solid shape.

Side wall 214a and side wall 214b are disposed spaced apart from each other in the second direction. Side wall 214a and side wall 214b are formed to extend in the first direction.

End plate 214c and end plate 214d are disposed spaced apart from each other in the first direction. End plate 214c and end plate 214d are formed to extend in the second direction. End plate 214c connects one end of side wall 214a and one end of side wall 214b. End plate 214d connects the other end of side wall 214a and the other end of side wall 214b.

End plate 214d is provided with an air-permeable films 218 and 219 (see Fig. 2). Air-permeable film 218 and air-permeable film 219 are waterproof but air-permeable film. Air-permeable film 218 and air-permeable film 219 are each formed by GORE-TEX (registered trademark), for example. In power storage device 1, as the internal pressure inside the housing case 20 increases, a gas is exhausted out of housing case 20 through air-permeable films 218 and 219. Moreover, as the internal pressure inside the housing case 20 reduces, a gas external to housing case 20 enters housing case 20 through air-permeable films 218 and 219. Note that the air-permeable films 218 and 219 may be exhaust-gas valves which open when the internal pressure inside the housing case 20 is greater than or equal to a reference value. The exhaust-gas valve may be configured of a check valve.

Side wall 214a, side wall 214b, end plate 214c, and end plate 214d each include a securing portion 90. Each securing portion 90 is formed in a hollow shape. Note that each securing portion 90 may be formed in a solid shape.

Each securing portion 90 is secured to vehicle body 3 (see Fig. 1). For example, a securing portion 91 is formed on the outer surface of side wall 214a. Referring to Fig. 5, securing portion 91 is formed to project from side wall 214a in the second direction. Securing portion 91 is secured to vehicle body 3 by a fastener member 95. For example, vehicle body 3 includes side sills 3b, disposed spaced apart from each other in the width direction of vehicle 2 (see Fig. 1), a cross member connecting side sills 3b, and a floor panel. Securing portion 91 is secured to side sill 3b by fastener member 95. Note that the securing portion 91 may be secured to the floor panel.

Referring to Fig. 3, partition wall 216a and partition wall 216b are disposed in an area surrounded by bottom plate 212 and surrounding wall 214. Partition wall 216a is disposed adjacent to end plate 214c. Partition wall 216b is disposed spaced apart from end plate 214d in the first direction. Partition wall 216a and partition wall 216b are each formed to extend in the second direction. Partition wall 216a and partition wall 216b have a function to restrain power storage stack 10 from both sides in the first direction. Partition wall 216a and partition wall 216b are each formed in a hollow shape. Note that the partition wall 216a and partition wall 216b each may be formed in a solid shape.

Referring to Fig. 5, upper cover 220 is disposed to block an opening of lower case 210. For example, the outer peripheral edge of upper cover 220 is secured to the upper end of side wall 214a.

Referring to Fig. 2, a space, formed between lower case 210 and upper cover 220, accommodates multiple power storage stacks 10, wiring panel 50, devices 60, and cooling device 70.

Insulator plate 30 is made of an electrically insulative material (e. g., a resin composition). For example, insulator plate 30 is formed in a plate shape. Multiple through-holes 30h are formed in insulator plate 30, spaced apart from one another in the first direction and the second direction. Insulator plate 30 is disposed between panel member 40 and bottom plate 212 of lower case 210. Referring to Fig. 5, insulator plate 30 is secured to lower surface 212a of bottom plate 212.

Referring to Fig. 2, panel member 40 has a function to protect bottom plate 212 of lower case 210. Panel member 40 is formed to cover insulator plate 30 and lower surface 212a of bottom plate 212. For example, panel member 40 is formed in a plate shape. Referring to Fig. 5, a sealing member 81 is disposed between the outer peripheral edge of panel member 40 and lower surface 212a of bottom plate 212. The outer peripheral edge of panel member 40 is secured to lower surface 212a of bottom plate 212 via sealing member 81.

Referring to Fig. 2, wiring panel 50 is disposed below the multiple power storage stacks 10. Referring to Fig. 6, wiring panel 50 includes an insulator plate 51, multiple busbar modules 510, and multiple electrically insulating protections 52.

Insulator plate 51 is made of an electrically insulative material (e. g., a resin composition). By way of example, insulator plate 51 is formed of a flexible resin. For example, insulator plate 51 is formed in a plate shape. Insulator plate 51 is disposed on a portion of upper surface 212b (see Fig. 5) of bottom plate 212 of lower case 210, between partition wall 216a and partition wall 216b (see Fig. 2).

Insulator plate 51 includes a lower surface 51a and an upper surface 51b. Lower surface 51a and upper surface 51b are disposed spaced apart from each other in the up-down direction. Upper surface 51b is disposed above the lower surface 51a.

Multiple grooves 51c are formed in upper surface 51b of insulator plate 51, spaced apart from one another in the first direction and the second direction.

Multiple through-holes 51h are formed in insulator plate 51, spaced apart from one another in the first direction and the second direction.

Multiple busbar modules 510 are disposed on upper surface 51b of insulator plate 51. Busbar module 510 includes one or more busbars 500. In Embodiment 1, busbar module 510 includes a busbar row 510a and a busbar row 510b that is spaced apart from busbar row 510a in the second direction. Busbar row 510a and busbar row 510b each include multiple busbars 500 arranged in the first direction. Note that the busbar module 510 may include one busbar row. Moreover, the busbar row may include one busbar 500.

Busbar 500 is formed of a conductive material such as a metallic material. Busbar 500 electrically connects a pair of power storage cells 100 adjacent to each other in the first direction. Busbar 500 is disposed in groove 51c and secured to insulator plate 51.

Power storage stack 10 is disposed on the upper surface of busbar module 510. As external terminals 120a and 120b of multiple power storage cells 100, included in power storage stack 10, are connected to busbar module 510, the multiple power storage cells 100 are connected in series.

Electrically insulating protection 52 is made of a heat resistant material (e. g., mica). Electrically insulating protection 52 is disposed on upper surface 51b of insulator plate 51. Electrically insulating protection 52 is disposed to block multiple through-holes 51h arranged in the first direction. Electrically insulating protection 52 includes a strip 52a extending in the first direction and multiple blocked portions 52b formed on the lower surface of strip 52a. Each blocked portion 52b is disposed within through-hole 51h.

Referring to Fig. 5, a space S is formed between panel member 40 and bottom plate 212. Space S functions as a gas exhaust path for exhausting a gas, exhausted through cell exhaust-gas valve SV of power storage cell 100, out of housing case 20 (see Fig. 2).

Through-hole 51h, through-hole 212h, and through-hole 30h are arranged in the up-down direction. Cell exhaust-gas valve SV is provided above the through-hole 51h. In other words, through-hole 51h, through-hole 212h, and through-hole 30h are provided at positions opposite the cell exhaust-gas valve SV. Blocked portion 52b of electrically insulating protection 52, which blocks through-hole 51h, is also disposed at a position opposite the cell exhaust-gas valve SV. As a gas is exhausted through cell exhaust-gas valve SV, blocked portion 52b, located below the cell exhaust-gas valve SV, is perforated and the pore functions as a passage for the gas. Since through-hole 51h, through-hole 212h, and through-hole 30h are provided at positions opposite the cell exhaust-gas valve SV, when a gas is exhausted through cell exhaust-gas valve SV, the gas flows to space S, passing through through-hole 51h, through-hole 212h, and through-hole 30h. Space S extends to end plate 214d of Fig. 3.

When a gas is exhausted from any of power storage cells 100, the gas passes through space S, spreads in the first direction, and is exhausted out of housing case 20 through air-permeable films 218 and 219 of Fig. 2.

Referring to Fig. 3, devices 60 are disposed between partition wall 216b and end plate 214d. Devices 60 may include a junction box. Devices 60 can include a relay or a control device, etc.

Cooling device 70 includes multiple cooling plates 71, a device cooler 72, an upstream pipe 73, and a downstream pipe 74.

Each cooling plate 71 is disposed between a pair of power storage stacks 10 adjacent to each other in the second direction. Each cooling plate 71 is formed in a plate shape that is elongated in the first direction. Each cooling plate 71 has a flow passage through which a refrigerant flows in the first direction. In Embodiment 1, while the number of cooling plate 71 is five, the number of cooling plates 71 is not limited to five. The number of cooling plates 71 depends on the number of power storage stacks 10.

Device cooler 72 cools devices 60. Device cooler 72 is disposed between bottom plate 212 and devices 60.

Each of upstream pipe 73 and downstream pipe 74 is a pipe through which a refrigerant (such as water or oil) runs. An inflow port 75 and an outflow port 76 are provided in end plate 214c of surrounding wall 214.

Upstream pipe 73 has an upstream end connected to inflow port 75. Upstream pipe 73 has six downstream ends. One downstream end of upstream pipe 73 is connected to device cooler 72. Each of the remaining downstream ends of upstream pipe 73 is connected to cooling plate 71. Downstream pipe 74 has six upstream ends. One upstream end of downstream pipe 74 is connected to device cooler 72. Each of the remaining upstream ends of downstream pipe 74 is connected to cooling plate 71. A downstream end of downstream pipe 74 is connected to outflow port 76. The refrigerant, supplied from inflow port 75, flows into each cooling plate 71 and device cooler 72 through upstream pipe 73, cools each power storage cell 100 and devices 60, and then flows out of outflow port 76 through downstream pipe 74.

Note that each cooling plate 71 may be disposed between a pair of power storage cells 100 adjacent to each other in the first direction. If each cooling plate 71 is disposed between the pair of power storage cells 100 adjacent to each other in the first direction, each cooling plate 71 is formed in a plate shape elongated in the second direction. If each cooling plate 71 is disposed between a pair of power storage cells 100 adjacent to each other in the first direction, multiple power storage stacks 10 may be disposed with no spacing therebetween in the second direction.

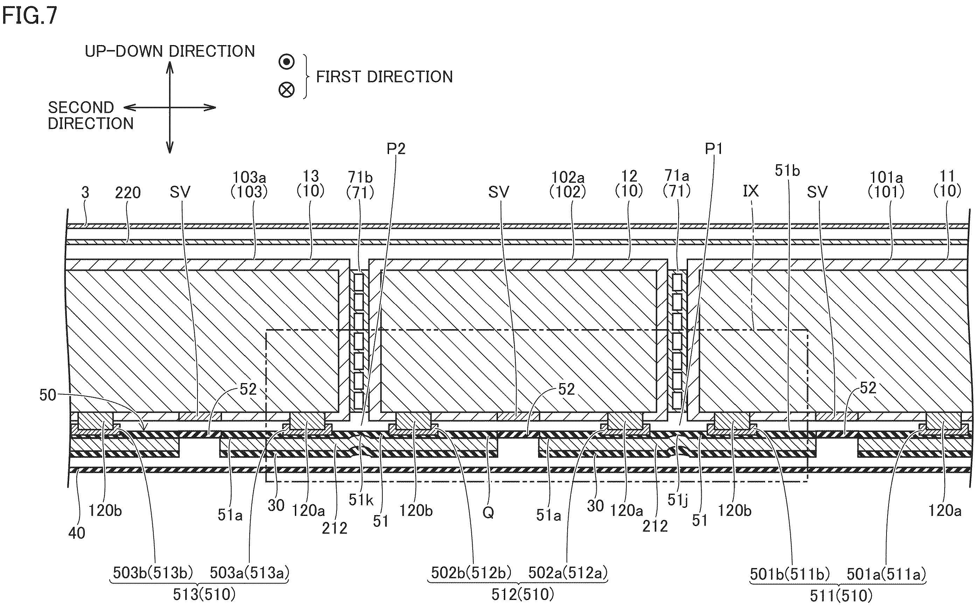

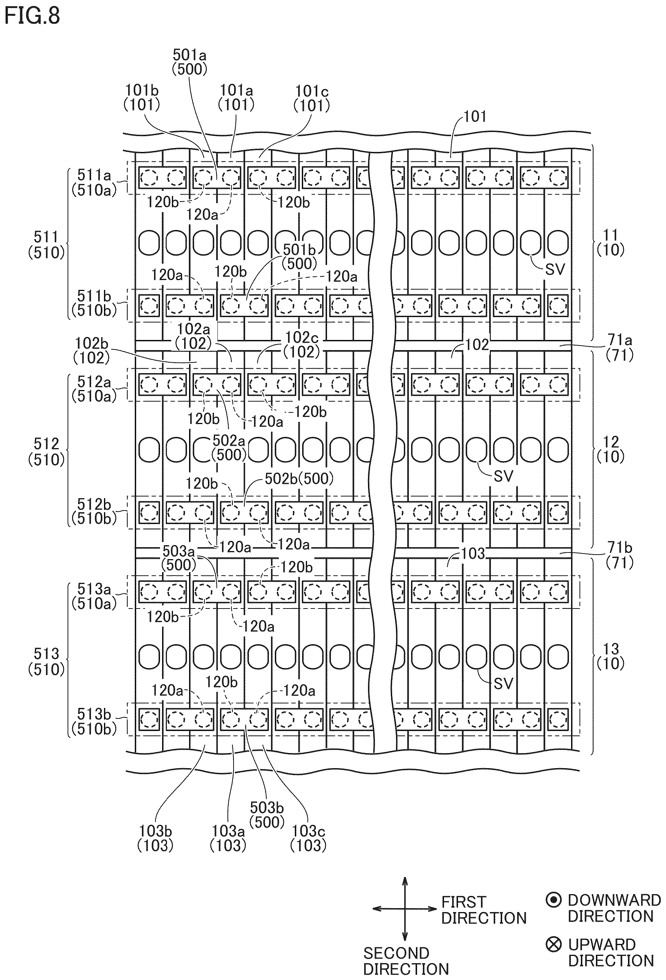

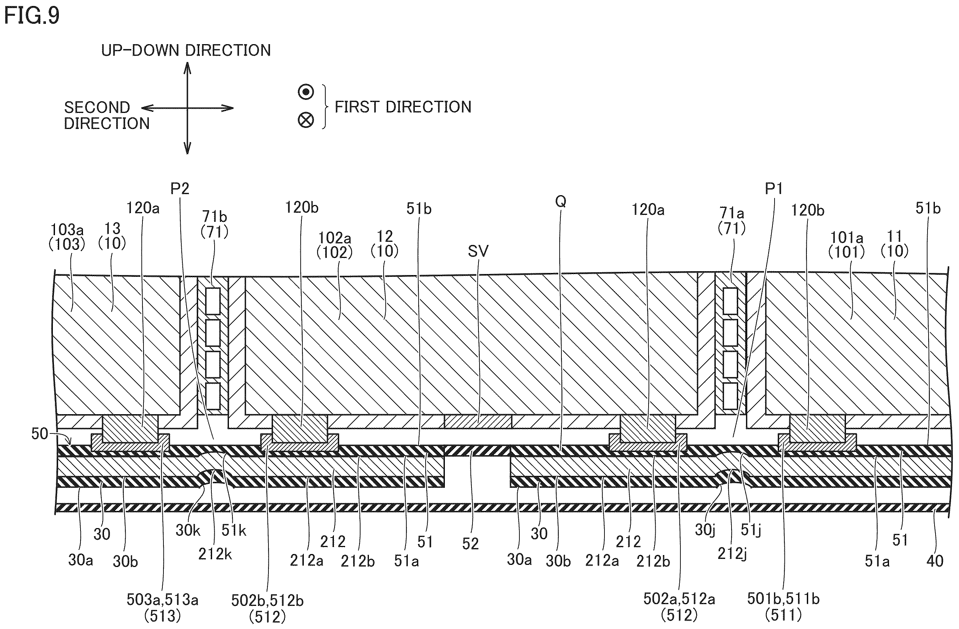

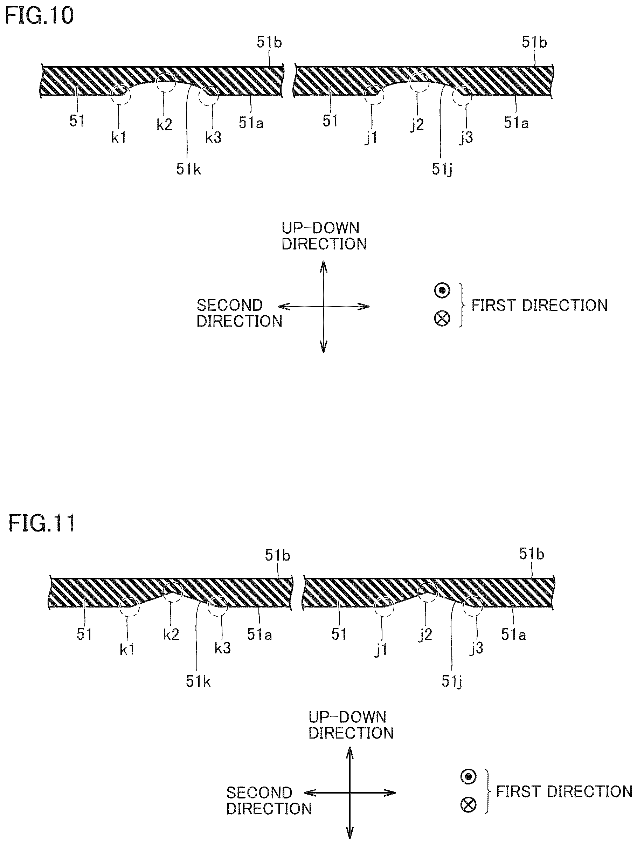

Fig. 7 is a cross-sectional view of power storage device 1, taken along a VII-VII line of Fig. 3. Fig. 8 is a bottom view showing three busbar modules, three power storage stacks, and two cooling plates. Fig. 9 is an enlarged cross-sectional view of an area IX of Fig. 7. Fig. 10 is an enlarged cross-sectional view of grooves 51j and 51k of Fig. 9.

Referring to Fig. 7, multiple power storage stacks 10 described above include a power storage stack 11, a power storage stack 12, and a power storage stack 13. Power storage stack 11 is one example of a "first power storage stack" according to the present disclosure. Power storage stack 12 is one example of a "second power storage stack" according to the present disclosure. Power storage stack 13 is one example of a "third power storage stack" according to the present disclosure. Power storage stack 12 is disposed adjacent to power storage stack 11 in the second direction. Power storage stack 13 is disposed adjacent to power storage stack 12 in the second direction. Power storage stack 11, power storage stack 12, and power storage stack 13 are disposed in the second direction in the listed order.

Multiple cooling plates 71 described above include a cooling plate 71a and a cooling plate 71b. Cooling plate 71a is one example of a "first cooling plate" according to the present disclosure. Cooling plate 71b is one example of a "second cooling plate" according to the present disclosure. Cooling plate 71a is cooling plate 71 that is disposed between power storage stack 11 and power storage stack 12. Cooling plate 71a is formed to extend in the first direction. Cooling plate 71b is cooling plate 71 that is disposed between power storage stack 12 and power storage stack 13. Cooling plate 71b is formed to extend in the first direction. In Embodiment 1, power storage stack 12 is disposed adjacent to power storage stack 11 via cooling plate 71a in the second direction. Power storage stack 13 is disposed adjacent to power storage stack 12 via cooling plate 71b in the second direction. Note that the cooling plate 71a may not be disposed between power storage stack 11 and power storage stack 12. Moreover, cooling plate 71b may not be disposed between power storage stack 12 and power storage stack 13.

Referring to Fig. 8, power storage stack 11 includes multiple power storage cells 101 arranged in the first direction. Power storage stack 12 includes multiple power storage cells 102 arranged in the first direction. Power storage stack 13 includes multiple power storage cells 103 arranged in the first direction. Power storage cell 101 is one example of a "first power storage cell" according to the present disclosure. Power storage cell 102 is one example of a "second power storage cell" according to the present disclosure. Power storage cell 103 is one example of a "third power storage cell" according to the present disclosure.

Multiple busbar modules 510 described above include a busbar module 511, a busbar module 512, and a busbar module 513. Referring to Fig. 7, busbar module 511, busbar module 512, and busbar module 513 are disposed on insulator plate 51. More specifically, busbar module 511, busbar module 512, and busbar module 513 are disposed on upper surface 51b of insulator plate 51.

Referring to Fig. 8, busbar module 511 is busbar module 510, among multiple busbar modules 510 described above, which electrically connects multiple power storage cells 101. Busbar module 511 is one example of a "first busbar module" according to the present disclosure. Power storage cell 101 has external terminals 120a and 120b connected to busbar module 511. As external terminals 120a and 120b of multiple power storage cells 101 are connected to busbar module 511, multiple power storage cells 101 are electrically connected in series.

Busbar module 511 includes a busbar row 511a and a busbar row 511b. Busbar row 511a is busbar row 510a included in busbar module 511, and busbar row 511b is busbar row 510b included in busbar module 511. Busbar row 511a includes busbars 501a. Busbar 501a is one example of busbar 500 included in busbar row 511a. Busbar row 511b is disposed closer to busbar module 512 than busbar row 511a. Busbar row 511b includes busbars 501b. Busbar 501b is one example of busbar 500 included in busbar row 511b.

Multiple power storage cells 101 include three power storage cells 101 adjacent to one another. The three power storage cells 101, adjacent to one another, include a power storage cell 101a, a power storage cell 101b, and a power storage cell 101c. Power storage cell 101a is located in the middle, in the first direction, of the three power storage cells 101 adjacent to one another. Power storage cell 101b is located on one side of power storage cell 101a in the first direction. Power storage cell 101c is located on the other side of power storage cell 101a in the first direction. Busbar 501a electrically connects power storage cell 101a and power storage cell 101b. Busbar 501b electrically connects power storage cell 101a and power storage cell 101c.

Busbar module 512 is busbar module 510, among multiple busbar modules 510 described above, which electrically connects multiple power storage cells 102. Busbar module 512 is one example of a "second busbar module" according to the present disclosure. Power storage cell 102 has external terminals 120a and 120b connected to busbar module 512. As external terminals 120a and 120b of multiple power storage cells 102 are connected to busbar module 512, multiple power storage cells 102 are electrically connected in series.

Busbar module 512 includes a busbar row 512a and a busbar row 512b. Busbar row 512a is busbar row 510a included in busbar module 512, and busbar row 512b is busbar row 510b included in busbar module 512. Busbar row 512a includes busbars 502a. Busbar 502a is one example of busbar 500 included in busbar row 512a. Busbar row 512b is disposed closer to busbar module 513 than busbar row 512a. Busbar row 512b includes busbars 502b. Busbar 502b is one example of busbar 500 included in busbar row 512b.

Multiple power storage cells 102 include three power storage cells 102 adjacent to one another. The three power storage cells 102 adjacent to one another include a power storage cell 102a, a power storage cell 102b, and a power storage cell 102c. Power storage cell 102a is located in the middle, in the first direction, of the three power storage cells 102 adjacent to one another. Power storage cell 102b is located on one side of power storage cell 102a in the first direction. Power storage cell 102c is located on the other side of power storage cell 102a in the first direction. Busbar 502a electrically connects power storage cell 102a and power storage cell 102b. Busbar 502b electrically connects power storage cell 102a and power storage cell 102c.

Busbar module 513 is busbar module 510, among multiple busbar modules 510 described above, which electrically connects multiple power storage cells 103. Busbar module 513 is one example of a "third busbar module" according to the present disclosure. Power storage cell 103 has external terminals 120a and 120b connected to busbar module 513. As external terminals 120a and 120b of multiple power storage cells 103 are connected to busbar module 513, multiple power storage cells 103 are electrically connected in series.

Busbar module 513 includes a busbar row 513a and a busbar row 513b. Busbar row 513a is busbar row 510a included in busbar module 513, and busbar row 513b is busbar row 510b included in busbar module 513. Busbar row 513a includes busbars 503a. Busbar 503a is one example of busbar 500 included in busbar row 513a. Busbar row 513b is disposed further away from busbar module 512 than busbar row 513a. Busbar row 513b includes busbars 503b. Busbar 503b is one example of busbar 500 included in busbar row 513b.

Multiple power storage cells 103 include three power storage cells 103 adjacent to one another. The three power storage cells 103 adjacent to one another include a power storage cell 103a, a power storage cell 103b, and a power storage cell 103c. Power storage cell 103a is located in the middle, in the first direction, of the three power storage cells 103 adjacent to one another. Power storage cell 103b is located on one side of power storage cell 103a in the first direction. Power storage cell 103c is located on the other side of power storage cell 103a in the first direction. Busbar 503a electrically connects power storage cell 103a and power storage cell 103b. Busbar 503b electrically connects power storage cell 103a and power storage cell 103c.

Referring to Fig. 7, wiring panel 50 is disposed below the power storage stack 11, power storage stack 12, and power storage stack 13. As described above, wiring panel 50 includes insulator plate 51, multiple busbar modules 510, and multiple electrically insulating protections 52.

Referring to Figs. 9 and 10, insulator plate 51 has first bending starting points j1, j2, and j3 provided between busbar module 511 and busbar module 512, and second bending starting points k1, k2, and k3 provided between busbar module 512 and busbar module 513. The dotted portions in Fig. 10 indicate first bending starting points j1, j2, and j3 and second bending starting points k1, k2, and k3. Specifically, groove 51j and groove 51k are formed in insulator plate 51. Groove 51j is one example of a "first groove" according to the present disclosure. Groove 51k is one example of a "second groove" according to the present disclosure.

Groove 51j is formed in lower surface 51a of insulator plate 51. Groove 51j is formed to extend in the first direction. Groove 51j is located below a first gap P1 running between busbar module 511 and busbar module 512. First gap P1 runs between busbar row 511b and busbar row 512a. First bending starting points j1, j2, and j3 are corners of groove 51j. In other words, groove 51j is a groove having first bending starting points j1, j2, and j3 as corners. In the example illustrated in Fig. 10, first bending starting points j1 and j3 are angular portions of groove 51j, and the first bending starting point j2 is a curved portion of groove 51j.

Groove 51k is formed in lower surface 51a of insulator plate 51. Groove 51k is formed to extend in the first direction. Groove 51k is located below a second gap P2 running between busbar module 512 and busbar module 513. Second gap P2 runs between busbar row 512b and busbar row 513a. Second bending starting points k1, k2, and k3 are corners of groove 51k. In other words, groove 51k is a groove having second bending starting points k1, k2, and k3 as corners. In the example illustrated in Fig. 10, second bending starting points k1 and k3 are angular portions of groove 51k, and second bending starting point k2 is a curved portion of groove 51k.

Busbar module 512 is secured to an area Q between groove 51j having first bending starting points j1, j2, and j3 as corners and groove 51k having second bending starting points k1, k2, and k3 as corners in insulator plate 51.

Upper surface 51b of insulator plate 51 is formed flat. Note that the upper surface 51b may not be flat. Upper surface 51b may bulge upward above the groove 51j and above the groove 51k.

Upper surface 212b of bottom plate 212 is curved along lower surface 51a of insulator plate 51. A groove 212j and a groove 212k are formed in lower surface 212a of bottom plate 212. Groove 212j is one example of a "first bottom-plate groove" according to the present disclosure. Groove 212k is one example of a "second bottom-plate groove" according to the present disclosure. Groove 212j and groove 212k are each formed to extend in the first direction. Groove 212j is located below the groove 51j. Groove 212k is located below the groove 51k.

Insulator plate 30 includes a lower surface 30a and an upper surface 30b. Lower surface 30a and upper surface 30b are disposed spaced apart from each other in the up-down direction. Upper surface 30b is located above the lower surface 30a. Upper surface 30b of insulator plate 30 is curved along lower surface 212a of bottom plate 212. A groove 30j and a groove 30k are formed in lower surface 30a of insulator plate 30. Groove 30j and groove 30k are each formed to extend in the first direction. Groove 30j is located below the groove 51j. Groove 30k is located below the groove 51k. Note that the lower surface 30a may be formed flat.

Cooling plate 71a is disposed above the groove 51j. Cooling plate 71a is disposed at a position apart upward from groove 51j. Cooling plate 71b is disposed above the groove 51k. Cooling plate 71b is disposed at a position apart upward from groove 51k. Note that the cooling plate 71a may not be disposed above the groove 51j. Moreover, cooling plate 71b may not be disposed above the groove 51k.

Because groove 51j and groove 51k are formed in insulator plate 51, as an impact is input to power storage device 1 from below the power storage device 1, a stress is concentrated on groove 51j and groove 51k, ameliorating the stress applied to area Q. In other words, when an impact is input to power storage device 1 from below the power storage device 1, area Q is resistant to deformation. Therefore, a poor electrical connection is suppressed from occurring between busbar module 512 secured to area Q and external terminals 120a and 120b (external terminals 120a and 120b of multiple power storage cells 102 included in power storage stack 12) connected to busbar module 512. Because a poor electrical connection is suppressed from occurring between busbar module 512 and external terminals 120a and 120b connected to busbar module 512, a short circuit is suppressed from occurring between power storage cells 102 too.

In addition, because groove 212j, located below the groove 51j, and groove 212k, located below the groove 51k, are formed in bottom plate 212, as an impact is input to power storage device 1 from below the power storage device 1, a stress is likely to be concentrated on groove 51j and groove 51k.

Furthermore, because groove 30j, located below the groove 51j, and groove 30k, located below the groove 51k, are formed in insulator plate 30, as an impact is input to power storage device 1 from below the power storage device 1, a stress is likely to be concentrated on groove 51j and groove 51k.

Because cooling plate 71a is disposed above the groove 51j and cooling plate 71b is disposed above the groove 51k, the limited space within power storage device 1 can be effectively leveraged. Because cooling plate 71a is disposed at a position apart upward from groove 51j and cooling plate 71b is disposed apart upward from groove 51k, as an impact is input to power storage device 1 from below the power storage device 1, the impact can be suppressed from reaching cooling plate 71a and cooling plate 71b.

In this manner, power storage device 1 according to Embodiment 1 includes: power storage stack 11 including power storage cell 101; power storage stack 12 disposed adjacent to power storage stack 11 and including power storage cell 102; power storage stack 13 disposed adjacent to power storage stack 12 and including power storage cell 103; insulator plate 51 disposed below the power storage stack 11, power storage stack 12, and power storage stack 13; and busbar module 511, busbar module 512, and busbar module 513, which are disposed on insulator plate 51. Insulator plate 51 has first bending starting points j1, j2, and j3, located between busbar module 511 and busbar module 512, and second bending starting points k1, k2, and k3, located between busbar module 512 and busbar module 513.

Owing to this, as an impact is input to power storage device 1 from below the power storage device 1, a stress is concentrated on groove 51j having first bending starting points j1, j2, and j3 as corners and groove 51k having second bending starting points k1, k2, and k3 as corners, ameliorating a stress applied to area Q between groove 51j and groove 51k in insulator plate 51. In other words, when an impact is input to power storage device 1 from below the power storage device 1, area Q is resistant to deformation. Accordingly, power storage device 1 according to Embodiment 1 can suppress a poor electrical connection from occurring between busbar module 512 secured to area Q and external terminals 120a and 120b (external terminals 120a and 120b of power storage cells 102 included in power storage stack 12) connected to busbar module 512.

Moreover, in power storage device 1 according to Embodiment 1, power storage stack 11 includes multiple power storage cells 101. Power storage stack 12 includes multiple power storage cells 102. Power storage stack 13 includes multiple power storage cells 103. Busbar module 511 electrically connects multiple power storage cells 101. Busbar module 512 electrically connects multiple power storage cells 102. Busbar module 513 electrically connects multiple power storage cells 103. As described above, power storage device 1 according to Embodiment 1 can suppress a poor electrical connection from occurring between busbar module 512, secured to area Q between groove 51j and groove 51k, and external terminals 120a and 120b connected to busbar module 512. Because a poor electrical connection can be suppressed from occurring between busbar module 512 and external terminals 120a and 120b connected to busbar module 512, a short circuit can be suppressed from occurring between power storage cells 102 included in power storage stack 12 too.

Moreover, in power storage device 1 according to Embodiment 1, first bending starting points j1, j2, and j3 are corners of groove 51j, and second bending starting points k1, k2, and k3 are corners of groove 51k. Therefore, as an impact is input to power storage device 1 from below the power storage device 1, a stress is likely to be concentrated on groove 51j having first bending starting points j1, j2, and j3 as corners and groove 51k having second bending starting points k1, k2, and k3 as corners, ameliorating a stress applied to area Q between groove 51j and groove 51k in insulator plate 51.

In Embodiment 1, groove 212j, located below the groove 51j, and groove 212k, located below the groove 51k, are formed in bottom plate 212. Owing to this, as an impact is input to power storage device 1 from below the power storage device 1, a stress is likely to be concentrated on groove 51j and groove 51k. Therefore, a poor electrical connection is suppressed from occurring between busbar module 512, secured to area Q between groove 51j and groove 51k, and external terminals 120a and 120b (external terminals 120a and 120b of power storage cells 102 included in power storage stack 12) connected to busbar module 512.

In Embodiment 1, insulator plate 51 is formed of a flexible resin. Therefore, according to power storage device 1 of Embodiment 1, it is easy to form groove 51j and groove 51k in insulator plate 51.

In Embodiment 1, cooling plate 71a is disposed above the groove 51j, and cooling plate 71b is disposed above the groove 51k. Therefore, according to power storage device 1 of Embodiment 1, the limited space within power storage device 1 can be effectively leveraged.

Note that the groove 51j and groove 51k are not limited to have the shapes as illustrated in Fig. 10. Groove 51j and groove 51k may have the shapes as illustrated in Fig. 11, for example. Fig. 11 is a diagram showing Variation 1 of grooves 51j and 51k. The dotted portions in Fig. 11 indicate first bending starting points j1, j2, and j3, and second bending starting points k1, k2, and k3. In the example illustrated in Fig. 11, first bending starting points j1, j2, and j3 are angular portions of groove 51j, and second bending starting points k1, k2, and k3 are angular portions of groove 51k. In other words, all the corners of each of groove 51j and groove 51k may have angular shapes.

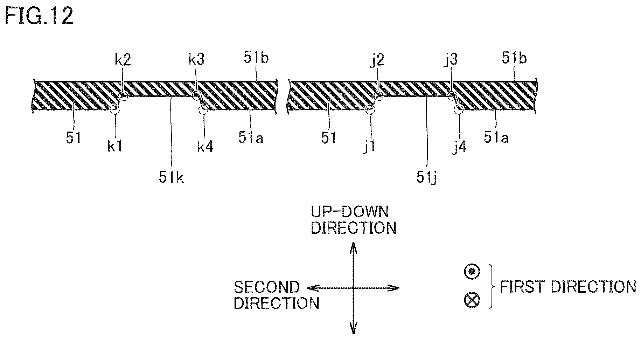

Groove 51j and groove 51k may have the shapes as illustrated in Fig. 12, for example. Fig. 12 is a diagram showing Variation 2 of grooves 51j and 51k. The dotted portions in Fig. 12 indicate first bending starting points j1, j2, j3, and j4 and second bending starting points k1, k2, k3, and k4. Insulator plate 51 has first bending starting points j1, j2, j3, and j4, located between busbar module 511 and busbar module 512, and second bending starting points k1, k2, k3, and k4 located between busbar module 512 and busbar module 513. First bending starting points j1, j2, j3, and j4 are corners of groove 51j. In other words, groove 51j is a groove having first bending starting points j1, j2, j3, and j4 as corners. Second bending starting points k1, k2, k3, and k4 are corners of groove 51k. In other words, groove 51k is a groove having second bending starting points k1, k2, k3, and k4 as corners. In the example illustrated in Fig. 12, first bending starting points j1, j2, j3, and j4 are curved portions of groove 51j, and second bending starting points k1, k2, k3, and k4 are curved portions of groove 51k. In other words, all the corners of each of groove 51j and groove 51k may have curved shapes.

### [Embodiment 2]

In Embodiment 1, groove 51j and groove 51k are formed in lower surface 51a of insulator plate 51. In Embodiment 2, in contrast, grooves are formed in the upper surface of an insulator plate 51.

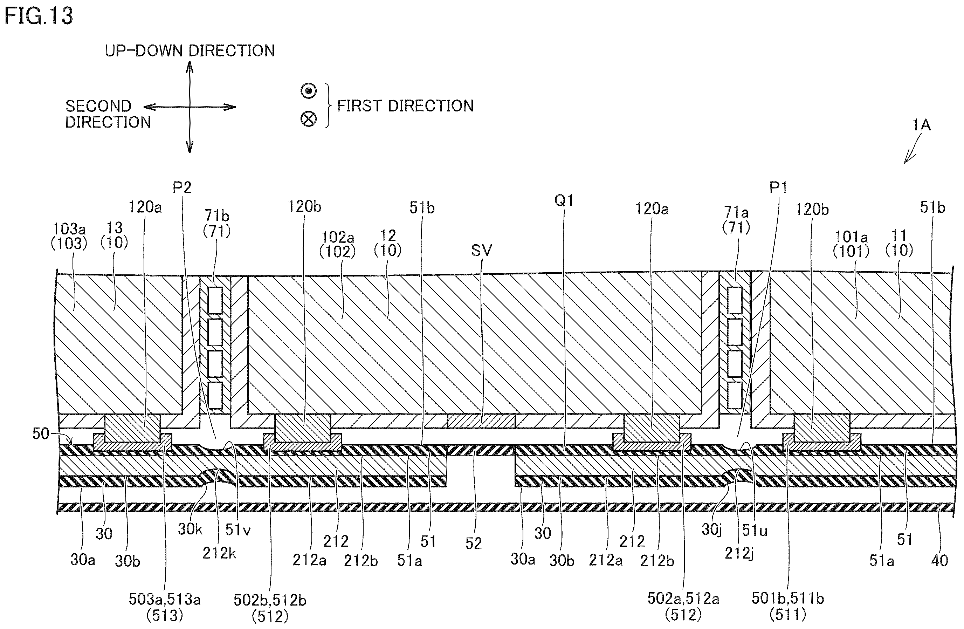

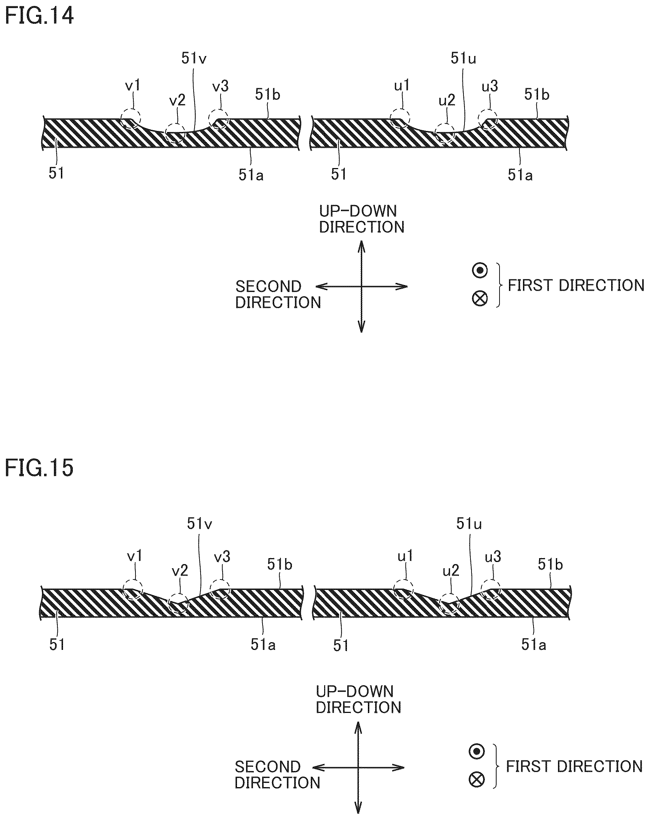

Fig. 13 is an enlarged cross-sectional view of an area IX of Fig. 7 of a power storage device according to Embodiment 2. Fig. 14 is an enlarged cross-sectional view of grooves 51u and 51v of Fig. 13. Referring to Figs. 13 and 14, insulator plate 51 of a power storage device 1A according to Embodiment 2 has first bending starting points u1, u2, and u3, located between a busbar module 511 and a busbar module 512, and second bending starting points v1, v2, and v3, located between busbar module 512 and busbar module 513. The dotted portions in Fig. 14 indicate first bending starting points u1, u2, and u3 and second bending starting points v1, v2, and v3. Specifically, groove 51u and groove 51v are formed in insulator plate 51 of power storage device 1A according to Embodiment 2. Groove 51u is one example of a "first groove" according to the present disclosure. Groove 51v is one example of a "second groove" according to the present disclosure.

Groove 51u is formed in an upper surface 51b of insulator plate 51. Groove 51u is formed to extend in a first direction. Groove 51u is located below a first gap P1. First bending starting points u1, u2, and u3 are corners of groove 51u. In other words, groove 51u is a groove having first bending starting points u1, u2, and u3 as corners. In the example illustrated in Fig. 14, first bending starting points u1 and u3 are angular portions of groove 51u, and first bending starting point u2 is a curved portion of groove 51u.

Groove 51v is formed in upper surface 51b of insulator plate 51. Groove 51v is formed to extend in the first direction. Groove 51v is located below a second gap P2. Second bending starting points v1, v2, and v3 are corners of groove 51v. In other words, groove 51v is a groove having second bending starting points v1, v2, and v3 as corners. Second bending starting points v1 and v3 are angular portions of groove 51v, and second bending starting point v2 is a curved portion of groove 51v.

Busbar module 512 is secured to an area Q1 between groove 51u having first bending starting points u1, u2, and u3 as corners and groove 51v having second bending starting points v1, v2, and v3 as corners in insulator plate 51. Lower surface 51a of insulator plate 51 is formed flat along an upper surface 212b of a bottom plate 212.

Upper surface 212b of bottom plate 212 is formed flat. A groove 212j and a groove 212k are formed in a lower surface 212a of bottom plate 212. Groove 212j is one example of a "first bottom-plate groove" according to the present disclosure. Groove 212k is one example of a "second bottom-plate groove" according to the present disclosure. Groove 212j and groove 212k are each formed to extend in the first direction. Groove 212j is located below the groove 51u. Groove 212k is located below the groove 51v.

An upper surface 30b of an insulator plate 30 is curved along lower surface 212a of bottom plate 212. A groove 30j and a groove 30k are formed in a lower surface 30a of insulator plate 30. Groove 30j and groove 30k are each formed to extend in the first direction. Groove 30j is located below the groove 51u. Groove 30k is located below the groove 51v. Note that the lower surface 30a may be formed flat.

A cooling plate 71a is disposed above the groove 51u. Cooling plate 71a is disposed apart upward from groove 51u. A cooling plate 71b is disposed above the groove 51v. Cooling plate 71b is disposed apart upward from groove 51v. Note that the cooling plate 71a may not be disposed above the groove 51u. Moreover, cooling plate 71b may not be disposed above the groove 51v.

Otherwise, power storage device 1A is the same as power storage device 1 according to Embodiment 1.

As an impact is input to power storage device 1A according to Embodiment 2 from below the power storage device 1A, a stress is concentrated on groove 51u having first bending starting points u1, u2, and u3 as corners and groove 51v having second bending starting points v1, v2, and v3 as corners, ameliorating a stress applied to area Q1 between groove 51u and groove 51v in insulator plate 51. In other words, when an impact is input to power storage device 1A from below the power storage device 1A, area Q1 is resistant to deformation. Accordingly, power storage device 1A according to Embodiment 2 can suppress a poor electrical connection from occurring between busbar module 512 secured to area Q1 and external terminals 120a and 120b (external terminals 120a and 120b of power storage cells 102 included in a power storage stack 12) connected to busbar module 512.

In power storage device 1A according to Embodiment 2, groove 212j, located below the groove 51u, and groove 212k, located below the groove 51v, are formed in bottom plate 212. Due to this, a stress is likely to be concentrated on groove 51u and groove 51v when an impact is input to power storage device 1A from below the power storage device 1A. Therefore, a poor electrical connection is suppressed from occurring between busbar module 512, secured to area Q1 between groove 51u and groove 51v, and external terminals 120a and 120b (external terminals 120a and 120b of power storage cells 102 included in power storage stack 12) connected to busbar module 512.

Note that the groove 51u and groove 51v are not limited to have the shapes as illustrated in Fig. 14. Groove 51u and groove 51v may have the shapes as illustrated in Fig. 15, for example. Fig. 15 is a diagram showing Variation 1 of grooves 51u and 51v. The dotted portions in Fig. 15 indicate first bending starting points u1, u2, and u3, and second bending starting points v1, v2, and v3. In the example illustrated in Fig. 15, first bending starting points u1, u2, and u3 are angular portions of groove 51u, and second bending starting points v1, v2, and v3 are angular portions of groove 51v. In other words, all the corners of each of groove 51u and groove 51v may have angular shapes.

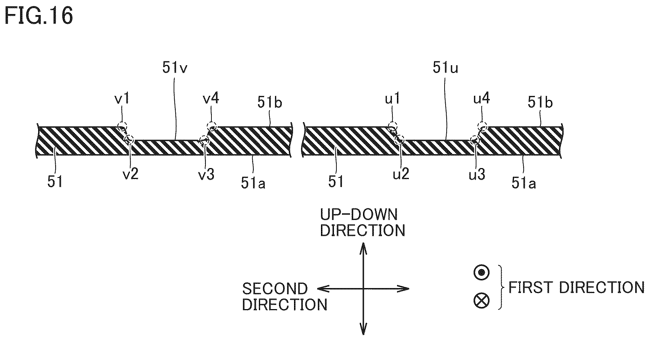

Groove 51u and groove 51v may have the shapes as illustrated in Fig. 16, for example. Fig. 16 is a diagram showing Variation 2 of grooves 51u and 51v. The dotted portions in Fig. 16 indicate first bending starting points u1, u2, u3, and u4, and second bending starting points v1, v2, v3, and v4. Insulator plate 51 has first bending starting points u1, u2, u3, and u4 located between busbar module 511 and busbar module 512, and second bending starting points v1, v2, v3, and v4 located between busbar module 512 and busbar module 513. First bending starting points u1, u2, u3, and u4 are corners of groove 51u. In other words, groove 51u is a groove having first bending starting points u1, u2, u3, and u4 as corners. Second bending starting points v1, v2, v3, and v4 are corners of groove 51v. In other words, groove 51v is a groove having second bending starting points v1, v2, v3, and v4 as corners. In the example illustrated in Fig. 16, first bending starting points u1, u2, u3, and u4 are curved portions of groove 51u, and second bending starting points v1, v2, v3, and v4 are curved portions of groove 51v. In other words, all the corners of each of groove 51u and groove 51v may have curved shapes.

### [Embodiment 3]

In Embodiment 1, groove 51j and groove 51k are formed in lower surface 51a of insulator plate 51, while no groove is formed in upper surface 51b of insulator plate 51. In Embodiment 3, in contrast, grooves are formed in the lower surface and the upper surface of an insulator plate 51.

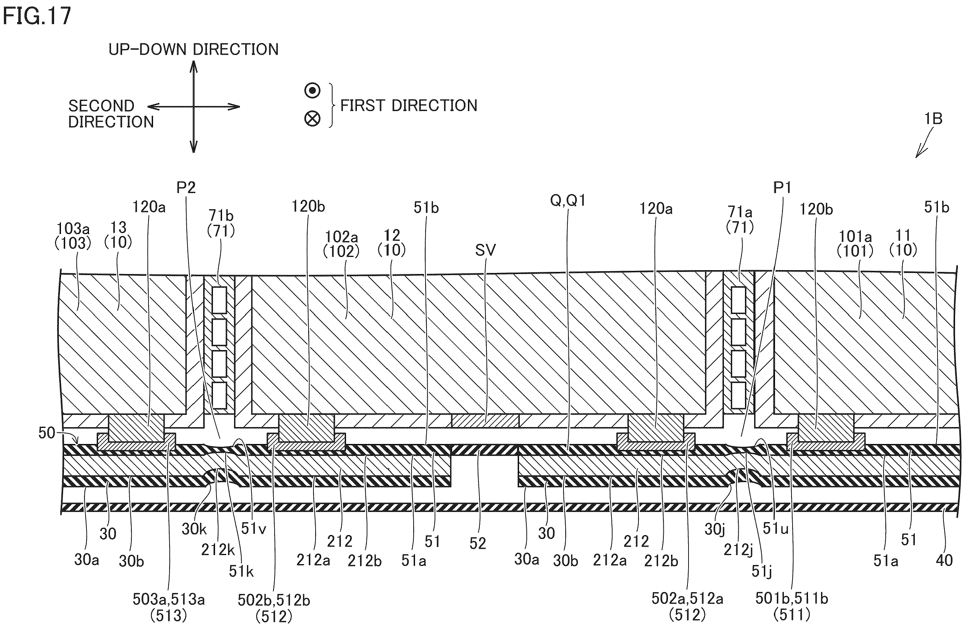

Fig. 17 is an enlarged cross-sectional view of an area IX of Fig. 7 of a power storage device according to Embodiment 3. A groove 51j, a groove 51k, a groove 51u, and a groove 51v are formed in insulator plate 51 of a power storage device 1B according to Embodiment 3. Groove 51j and groove 51u are each one example of a "first groove" according to the present disclosure. Groove 51k and groove 51v are each one example of a "second groove" according to the present disclosure.

Groove 51j and groove 51k are formed in a lower surface 51a of insulator plate 51. Groove 51j and groove 51k are each formed to extend in a first direction. Groove 51j is located below a first gap P1. Groove 51k is located below a second gap P2. As described above, groove 51j is a groove having first bending starting points j1, j2, and j3 as corners, and groove 51k is a groove having second bending starting points k1, k2, and k3 as corners (see Fig. 10).

Groove 51u and groove 51v are formed in an upper surface 51b of insulator plate 51. Groove 51u and groove 51v are each formed to extend in the first direction. Groove 51u is located below the first gap P1 and above the groove 51j. Groove 51v is located below the second gap P2 and above the groove 51k. As described above, groove 51u is a groove having first bending starting points u1, u2, and u3 as corners, and groove 51v is a groove having second bending starting points v1, v2, and v3 as corners (see Fig. 14).

A busbar module 512 is secured to an area Q between groove 51j having first bending starting points j1, j2, and j3 as corners and groove 51k having second bending starting points k1, k2, and k3 as corners in insulator plate 51.

An upper surface 212b of a bottom plate 212 is curved along lower surface 51a of insulator plate 51. A groove 212j and a groove 212k are formed in a lower surface 212a of bottom plate 212. Groove 212j is one example of a "first bottom-plate groove" according to the present disclosure, and groove 212k is one example of a "second bottom-plate groove" according to the present disclosure. Groove 212j and groove 212k are each formed to extend in the first direction. Groove 212j is located below the grooves 51j and 51u. Groove 212k is located below the grooves 51k and 51v.

An upper surface 30b of an insulator plate 30 is curved along lower surface 212a of bottom plate 212. A groove 30j and a groove 30k are formed in a lower surface 30a of insulator plate 30. Groove 30j and groove 30k are each formed to extend in the first direction. Groove 30j is located below the groove 51j. Groove 30k is located below the groove 51k. Note that the lower surface 30a may be formed flat.

A cooling plate 71a is disposed above the grooves 51j and 51u. Cooling plate 71a is disposed apart upward from grooves 51j and 51u. A cooling plate 71b is disposed above the grooves 51k and 51v. Cooling plate 71b is disposed apart upward from grooves 51k and 51v. Note that the cooling plate 71a may not be disposed above the grooves 51j and 51u. Moreover, cooling plate 71b may not be disposed above the grooves 51k and 51v.

Otherwise, power storage device 1B is the same as power storage device 1 according to Embodiment 1.

As an impact is input to power storage device 1B according to Embodiment 3 from below the power storage device 1B, a stress is concentrated on groove 51j having first bending starting points j1, j2, and j3 as corners, groove 51k having second bending starting points k1, k2, and k3 as corners, groove 51u having first bending starting points u1, u2, and u3 as corners, and groove 51v having second bending starting points v1, v2, and v3 as corners, ameliorating a stress applied to area Q between groove 51j and groove 51k in insulator plate 51. In other words, when an impact is input to power storage device 1B from below the power storage device 1B, area Q is resistant to deformation. Accordingly, power storage device 1B according to Embodiment 3 can suppress a poor electrical connection from occurring between busbar module 512 secured to area Q and external terminals 120a and 120b (external terminals 120a and 120b of power storage cells 102 included in a power storage stack 12) connected to busbar module 512.

In power storage device 1B according to Embodiment 3, groove 212j, located below the groove 51j and groove 51u, and groove 212k, located below the groove 51k and groove 51v, are formed in bottom plate 212. Due to this, a stress is likely to be concentrated on groove 51j, groove 51k, groove 51u, and groove 51v when an impact is input to power storage device 1B from below the power storage device 1B. Therefore, a poor electrical connection is suppressed from occurring between busbar module 512 secured to area Q, between groove 51j and groove 51k, and external terminals 120a and 120b (external terminals 120a and 120b of power storage cells 102 included in power storage stack 12) connected to busbar module 512.

Note that the busbar module 512 may be secured to area Q1 between groove 51u and groove 51v. In that case too, as an impact is input to power storage device 1B from below the power storage device 1B, a stress is concentrated on groove 51j, groove 51k, groove 51u, and groove 51v, ameliorating a stress applied to area Q1 in insulator plate 51. Therefore, a poor electrical connection is suppressed from occurring between busbar module 512 secured to area Q1 and external terminals 120a and 120b (external terminals 120a and 120b of power storage cells 102 included in power storage stack 12) connected to busbar module 512.

### [Embodiment 4]

In Embodiment 1, groove 51j and groove 51k are formed in lower surface 51a of insulator plate 51, and groove 212j and groove 212k are formed in lower surface 212a of bottom plate 212. In Embodiment 4, in contrast, grooves are formed in the upper surface of an insulator plate 51, and grooves are formed in the upper surface of a bottom plate 212.

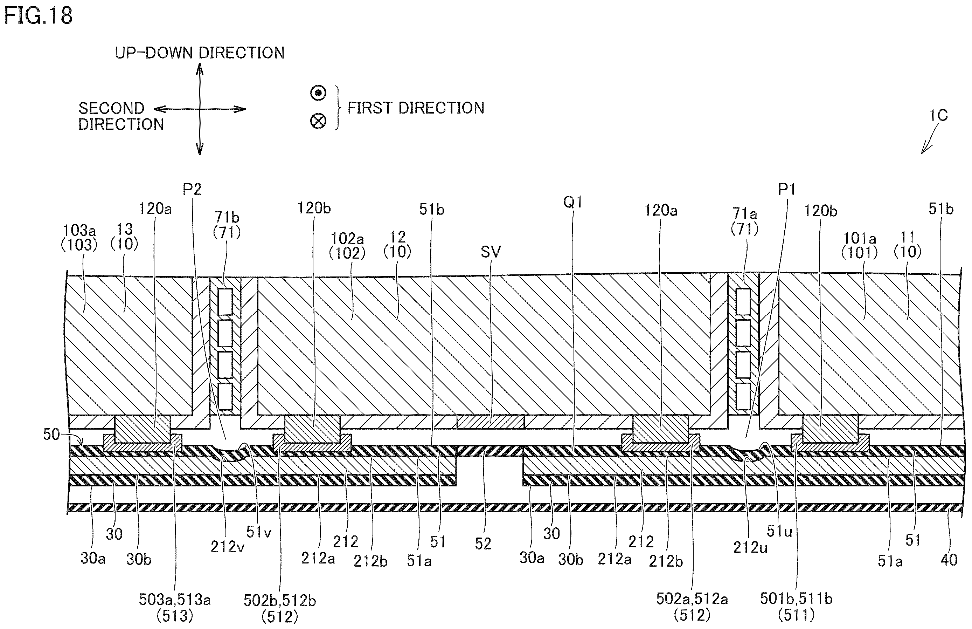

Fig. 18 is an enlarged cross-sectional view of an area IX of Fig. 7 of a power storage device according to Embodiment 4. A groove 51u and a groove 51v are formed in insulator plate 51 of a power storage device 1C according to Embodiment 4. Groove 51u is one example of a "first groove" according to the present disclosure. Groove 51v is one example of a "second groove" according to the present disclosure.

Groove 51u and groove 51v are formed in an upper surface 51b of insulator plate 51. Groove 51u and groove 51v are each formed to extend in the first direction. Groove 51u is located below a first gap P1. Groove 51v is located below a second gap P2. As described above, groove 51u is a groove having first bending starting points u1, u2, and u3 as corners, and groove 51v is a groove having second bending starting points v1, v2, and v3 as corners (see Fig. 14).

A busbar module 512 is secured to area Q1 between groove 51u having first bending starting points u1, u2, and u3 as corners and groove 51v having second bending starting points v1, v2, and v3 as corners in insulator plate 51. A lower surface 51a of insulator plate 51 is curved along an upper surface 212b of bottom plate 212.

A groove 212u and a groove 212v are formed in upper surface 212b of bottom plate 212. Groove 212u is one example of a "first bottom-plate groove" according to the present disclosure. Groove 212v is one example of a "second bottom-plate groove" according to the present disclosure. Groove 212u and groove 212v are formed to extend in the first direction. Groove 212u is located below the groove 51u. Groove 212v is located below the groove 51v.

Lower surface 212a of bottom plate 212 is formed flat. Note that the groove 212j extending in the first direction and groove 212k extending in the first direction may be formed in lower surface 212a, as shown in Fig. 9. When groove 212j and groove 212k are formed in lower surface 212a, groove 212j is located below the groove 51u, and groove 212k is located below the groove 51v .

An upper surface 30b of an insulator plate 30 is formed flat. Note that when groove 212j and groove 212k (see Fig. 9) are formed in lower surface 212a, upper surface 30b is curved along lower surface 212a of bottom plate 212.

A lower surface 30a of insulator plate 30 is formed flat. Note that the groove 30j extending in the first direction, and groove 30k extending in the first direction may be formed in lower surface 30a, as shown in Fig. 9. When groove 30j and groove 30k (see Fig. 9) are formed in lower surface 30a, groove 30j is located below the groove 51u, and groove 30k is located below the groove 51v.

A cooling plate 71a is disposed above the groove 51u. Cooling plate 71a is disposed apart upward from groove 51u. A cooling plate 71b is disposed above the groove 51v. Cooling plate 71b is disposed apart upward from groove 51v. Note that the cooling plate 71a may not be disposed above the groove 51u. Moreover, cooling plate 71b may not be disposed above the groove 51v.

Otherwise, power storage device 1C is the same as power storage device 1 according to Embodiment 1.

As impact is input to power storage device 1C according to Embodiment 4 from below the power storage device 1C, a stress is concentrated on groove 51u having first bending starting points u1, u2, and u3 as corners and groove 51v having second bending starting points v1, v2, and v3 as corners, ameliorating a stress applied to area Q1 between groove 51u and groove 51v in insulator plate 51. In other words, when an impact is input to power storage device 1C from below the power storage device 1C, area Q1 is resistant to deformation. Accordingly, power storage device 1C according to Embodiment 4 can suppress a poor electrical connection from occurring between busbar module 512 secured to area Q1 and external terminals 120a and 120b (external terminals 120a and 120b of power storage cells 102 included in a power storage stack 12) connected to busbar module 512.

In power storage device 1C according to Embodiment 4, groove 212u, located below the groove 51u, and groove 212v, located below the groove 51v, are formed in bottom plate 212. Due to this, when an impact is input to power storage device 1C from below the power storage device 1C, a stress is likely to be concentrated on groove 51u and groove 51v. Therefore, a poor electrical connection is suppressed from occurring between busbar module 512, secured to area Q1 between groove 51u and groove 51v, and external terminals 120a and 120b (external terminals 120a and 120b of power storage cells 102 included in power storage stack 12) connected to busbar module 512.

While the embodiments according to the present disclosure have been described above, the presently disclosed embodiments should be considered in all aspects illustrative and not restrictive. The scope of the present disclosure is defined by the appended claims. All changes which come within the meaning and range of equivalency of the appended claims are to be embraced within their scope.

## Claims

1. A power storage device, comprising:
a first power storage stack (11) including a first power storage cell (101);
a second power storage stack (12) disposed adjacent to the first power storage stack (11) and including a second power storage cell (102);
a third power storage stack (13) disposed adjacent to the second power storage stack (12) and including a third power storage cell (103); and
a wiring panel (50) disposed below the first power storage stack (11), the second power storage stack (12), and the third power storage stack (13), wherein
the wiring panel (50) includes:
an insulator plate (51); and
a first busbar module (511), a second busbar module (512), and a third busbar module (513), which are disposed on the insulator plate (51), wherein
the first busbar module (511) electrically connects the first power storage cell (101),
the second busbar module (512) electrically connects the second power storage cell (102), and
the third busbar module (513) electrically connects the third power storage cell (103), wherein
the insulator plate (51) has a first bending starting point (j 1, u1) located between the first busbar module (511) and the second busbar module (512), and a second bending starting point (k1, v1) located between the second busbar module (512) and the third busbar module (513).

2. The power storage device according to claim 1, wherein
the first power storage stack (11) includes a plurality of first power storage cells (101) arranged in a first direction, the plurality of first power storage cells (101) including the first power storage cell (101),
the second power storage stack (12) is disposed adjacent to the first power storage stack (11) in a second direction intersecting with the first direction and includes a plurality of second power storage cells (102) arranged in the first direction, the plurality of second power storage cells (102) including the second power storage cell (102),
the third power storage stack (13) is disposed adjacent to the second power storage stack (12) in the second direction and includes a plurality of third power storage cells (103) arranged in the first direction, the plurality of third power storage cells (103) including the third power storage cell (103),
the first busbar module (511) electrically connects the plurality of first power storage cells (101),
the second busbar module (512) electrically connects the plurality of second power storage cells (102), and
the third busbar module (513) electrically connects the plurality of third power storage cells (103).

3. The power storage device according to claim 1, wherein
the first bending starting point (j1, u1) is a corner of a first groove (51j, 51u) formed in the insulator plate (51), and
the second bending starting point (k1, v1) is a corner of a second groove (51k, 51v) formed in the insulator plate (51).

4. The power storage device according to claim 3, wherein
the first groove (51j) and the second groove (51k) are formed in a lower surface (51a) of the insulator plate (51).

5. The power storage device according to claim 3, wherein
the first groove (51u) and the second groove (51v) are formed in an upper surface (51b) of the insulator plate (51).

6. The power storage device according to claim 3, further comprising
a housing case (20) accommodating the first power storage stack (11), the second power storage stack (12), and the third power storage stack (13), wherein
the housing case (20) includes a bottom plate (212),
the insulator plate (51) is disposed on an upper surface (212b) of the bottom plate (212), wherein
a first bottom-plate groove (212j), located below the first groove (51j), and a second bottom-plate groove (212k), located below the second groove (51k), are formed in the bottom plate (212).

7. The power storage device according to claim 1, wherein
the insulator plate (51) is formed of a flexible resin.

8. The power storage device according to claim 3, further comprising
a cooling device (70) including a first cooling plate (71a) and a second cooling plate (71b), wherein
the first cooling plate (71a) is disposed between the first power storage stack (11) and the second power storage stack (12),
the second cooling plate (71b) is disposed between the second power storage stack (12) and the third power storage stack (13),
the first cooling plate (71a) is disposed above the first groove (51j), and
the second cooling plate (71b) is disposed above the second groove (51k).
